# EUROPEAN PATENT APPLICATION

(11) **EP 0 626 525 A1**
(43) Date of publication of application: **30.11.1994**
(21) Application number: 94303480.1
(22) Date of filing: 16.05.1994
(51) Int. Cl.: F16D 69/00

(54) **Friction element**

(30) Priority: 25.05.1993 GB 9310798
(71) Applicant: T&N TECHNOLOGY LIMITED, Cawston Rugby Warwickshire, CV22 7SA (GB)
(72) Inventor: Mellish, Graham, Macclesfield, Cheshire SK10 6UF (GB); Richmond, John William, Rugby, Warwickshire CV22 6NB (GB); Kao, Tseng Kuan, Rugby, Warwickshire CV22 7BW (GB)
(74) Representative: Drury, Peter Lawrence

(57) **Abstract**

A friction element (10) comprises a backing plate (12), and a block (14) of friction material which has a groove (22) therein to indicate wear. The groove (22) is formed between two indentations (24) in the block (14). The indentations (24) are formed by projections (40) into a layer (30) of particulate material from which the block (14) is formed. The indentations (24) have curved side walls.

## Description

This invention is concerned with a method of manufacturing a friction element, eg a brake pad, and with a friction element itself.

Friction elements in the form of brake pads usually comprise a backing plate and a block of friction material mounted on the backing plate. The block may incorporate an underlayer which engages the backing plate and may have projections which project into apertures in the backing plate to assist in securing the block to the backing plate. It is common practice to provide such blocks with at least one groove which has an opening defined by an upper surface of the block and extends across the block between points on opposite side surfaces thereof. Such grooves are provided to indicate the wear of the block and do not extend to the full depth of the block. Thus, such grooves are cut to a constant depth in such blocks so that by observing the remaining depth of groove it is possible to ascertain the wear which has occurred in service. Conventionally, such blocks are formed on the backing plate by assembling a layer of particulate material in contact with the backing plate in a die cavity. The particulate material contains a curable binder and is compacted against the backing plate to form an uncured block. Subsequent curing of the binder completes the block. The afore-mentioned grooves are formed by making saw cuts downwardly from the upper surface of the block, ie the surface away from the backing plate.

The conventional method of forming the grooves of a friction element, referred to above, results in grooves which have jagged edges at the ends thereof where the saw blade has entered and left the sides of the block. Such ragged edges are found to provide starting points for cracks while the friction element is in service, such cracks possibly resulting in failure of the element.

It is an object of the present invention to provide a method of manufacturing a friction element having a groove of the afore-mentioned type in which the formation of ragged edges as described above is avoided.

The invention provides a method of manufacturing a friction element which comprises a backing plate, and a block of friction material mounted on the backing plate, said block having a lower surface which extends parallel to the backing plate and is secured thereto, an upper surface which extends parallel to the lower surface and provides a friction surface of the element, and side surfaces which interconnect said upper and lower surfaces, the block defining at least one groove which has an opening defined by said upper surface and extends across the block between points on opposite side surfaces thereof, the method comprising assembling a layer of particulate material in contact with a backing plate in a die cavity, the die cavity having a bounding wall defining a periphery of said layer and arranged to define said side surfaces of the block, the particulate material comprising frictional fillers and a curable binder, characterised in that said bounding wall defines projections having curved sides which project into said layer at points corresponding to said points on opposite side surfaces of the block,the method also comprising moving a punch into said cavity thereby compacting said layer against the backing plate and forming a block of uncured friction material with indentations in side surfaces thereof caused by the projections, curing said binder, and cutting away material from between said indentations to form said groove.

In a method in accordance with the invention, the ends of said grooves are in indentations with curved surfaces which reduce the stress concentration and, therefore, the likelihood of crack formation.

In a method in accordance with the invention, the material may be cut away to form said groove by sawing.

A method in accordance with the invention may be used to provide a friction element with more than one groove. The provision of more than one groove is common practice to enable wear to be judged at different points on the friction element.

The invention also provides a friction element which comprises a backing plate, and a block of friction material mounted on the backing plate, said block having a lower surface which extends parallel to the backing plate and is secured thereto, an upper surface which extends parallel to the lower surface and provides a friction surface of the element, and side surfaces which interconnect said upper and lower surfaces, the block defining at least one groove which has an opening defined by said upper surface and extends across the block between points on opposite side surfaces thereof, characterised in that said groove extends between indentations in said side surfaces, said indentations having curved side walls.

There now follows a detailed description, to be read with reference to the accompanying drawings, of a method of manufacturing a friction element which is illustrative of the invention and of a friction element manufactured by the illustrative method.

In the drawings:
Figure 1 is a perspective view of a portion of an illustrative friction element manufactured by the illustrative method;
Figure 2 is a horizontal cross-sectional view taken through a die cavity in which the illustrative friction element is formed; and
Figure 3 is a vertical cross-sectional view taken through the cavity of Figure 2, the direction of view of Figure 2 being indicated by the line II-II.

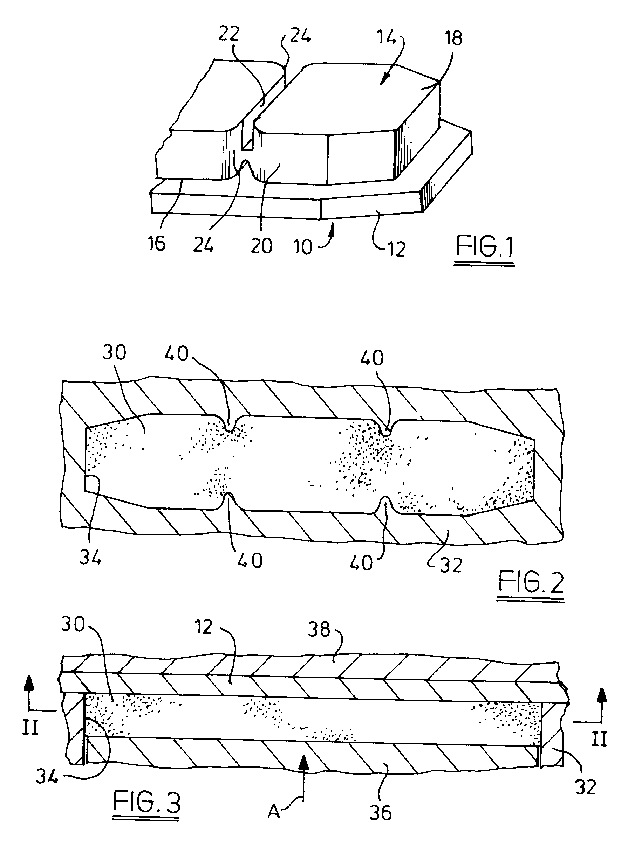

The illustrative friction element 10 shown in Figure 1 is a brake pad and comprises a backing plate 12, and a block 14 of friction material mounted on the backing plate 12. The backing plate 12 is made of steel and is generally rectangular, in plan view, except that end portions thereof taper inwardly. The block 14 is of the same general shape as the backing plate 12, in plan view, but is smaller. The block 14 is positioned centrally on top of the backing plate 12 so that the backing plate 12 projects beyond the block 14 all around the element 10.

The block 14 has a lower surface 16 which extends parallel to the backing plate 12 and is secured thereto by projections (not shown) of the block 14 which project into apertures (not shown) in the backing plate 12. The block 14 also has an upper surface 18 which extends parallel to the lower surface 16 and provides a friction surface of the element 10, ie the surface which, in service, applies braking force to a moving member, eg a disc. The block 14 also has side surfaces 20 which interconnect said upper and lower surfaces 16 and 18. The surfaces 20 are normal to the surfaces 16 and 18.

The block 14 also defines a groove 22 which is of generally rectangular cross-section. The groove 22 has an opening defined by the upper surface 18 of the block 14. The depth of the groove 22 is less than the thickness of the block 14. The groove 22 extends between indentations 24 in said side surfaces 20. The indentations 24 have curved side walls which make smooth transitions with the side surfaces 20 and with the groove 22. The indentations 24 extend throughout the thickness of the block 14.

The illustrative friction element 10 is manufactured by the illustrative method in which a layer of particulate material 30 is assembled in contact with the backing plate 12 in a die cavity 32. The die cavity 32 has a vertically-extending bounding wall 34 which defines the periphery of the layer 30 and is arranged to define said side surfaces 20 of the block 14. The die cavity 32 is open at the top and bottom and is of constant horizontal cross-section. A punch 36 is movable into the die cavity 32 from below, in the direction of the arrow A in Figure 3, and supports the layer 30. Specifically, the layer 30 which comprises frictional fillers and a curable binder, eg a phenolic resin, is dropped through the open top of the die cavity 32 so that it rests on the punch 36 and fills the die cavity 32 to the top. The backing plate 12 is then positioned so that it straddles the top of the die cavity 32. The backing plate 12 is then clamped in position by a platen 38.

The bounding wall 34 of the die cavity 32 defines four projections 40 which project into the layer 30 and extend for the full height of the die cavity 32. These projections 40 each have curved sides, which form smooth transitions with the remainder of the wall 34, and have a curved end. Two of the projections 40 project into said layer 30 at points corresponding to the points on opposite side surface 20 at which said indentations 24 are formed and the other two projections 40 are similarly disposed but at an opposite end of the backing plate 12.

The illustrative method continues by forming a block (not shown) which is the same size and shape as the block 14 (except for the groove 22) but is formed of uncured friction material. This block is formed by compacting the layer 30 against the backing plate 12 by moving the punch 36 into the die cavity 32. The punch 36 has indentations (not shown) which correspond to the projections 40 so that the punch 36 can move past the projections 40. The uncured block has indentations in side surfaces thereof formed by the projections 40.

The illustrative method continues by curing the binder by applying heat and, after removing the element from the die cavity 32, by cutting away material with a saw from between the indentations 24 to form the groove 22 and a further similar groove between the other two indentations.

## Claims

1. A method of manufacturing a friction element (10) which comprises a backing plate (12), and a block (14) of friction material mounted on the backing plate, said block having a lower surface (16) which extends parallel to the backing plate and is secured thereto, an upper surface (18) which extends parallel to the lower surface and provides a friction surface of the element, and side surfaces (20) which interconnect said upper and lower surfaces, the block defining at least one groove (22) which has an opening defined by said upper surface (18) and extends across the block between points on opposite side surfaces thereof, the method comprising assembling a layer of particulate material (30) in contact with a backing plate (12) in a die cavity (32), the die cavity having a bounding wall (34) defining a periphery of said layer and arranged to define said side surfaces of the block (20), the particulate material comprising frictional fillers and a curable binder, characterised in that said bounding wall (34) defines projections (40) having curved sides which project into said layer (30) at points corresponding to said points on opposite side surfaces of the block, the method also comprising moving a punch (36) into said cavity (32) thereby compacting said layer (30) against the backing plate (12) and forming a block of uncured friction material with indentations in side surfaces thereof caused by the projections (40), curing said binder, and cutting away material from between said indentations to form said groove (22).

2. A method according to Claim 1, characterised in that the material is cut away by sawing.

3. A friction element (10) which comprises a backing plate (12), and a block (14) of friction material mounted on the backing plate, said block having a lower surface (16) which extends parallel to the backing plate and is secured thereto, an upper surface (18) which extends parallel to the lower surface and provides a friction surface of the element, and side surfaces (20) which interconnect said upper and lower surfaces, the block defining at least one groove (22) which has an opening defined by said upper surface (18) and extends across the block between points on opposite side surfaces thereof, characterised in that said groove (22) extends between indentations (24) in said side surfaces, said indentations (24) having curved side walls.
